# EUROPÄISCHE PATENTSCHRIFT

(11) **EP 1 462 698 B1**
(45) Veröffentlichungstag und Bekanntmachung des Hinweises auf die Patenterteilung: **29.11.2006**
(21) Anmeldenummer: 04005936.2
(22) Anmeldetag: 12.03.2004
(51) Int. Cl.: F16L 3/12, F16L 3/02

(54) **Halter, insbesondere für Rohre, Kabel oder dergleichen**
Holder for pipes, cables or the like
Dispositif de fixation pour tuyaux, câbles ou similaire

(30) Priorität: 25.03.2003 DE 10313411
(43) Veröffentlichungstag der Anmeldung: 29.09.2004
(73) Patentinhaber: Newfrey LLC, Newark, Delaware 19711 (US)
(72) Erfinder: Rosemann, Frank, 35519 Rockenberg (DE); Seng, Hans Peter, 35447 Reiskirchen (DE)
(74) Vertreter: Haar, Lucas Heinz Jörn

(56) Entgegenhaltungen:
- WO-A-03/001069
- FR-A- 2 668 572

## Beschreibung

Die Erfindung betrifft einen Halter für stabförmige Gegenstände, wie Rohre, Kabel oder dergleichen, mit einem Befestigungsbereich, der zur Befestigung des Halters an einem Bauteil bestimmt ist, einem Paar Halterarme, die an einem Ende fest miteinander verbunden sind und einen U-förmigen Haltebereich mit einer oben offenen Rinne zur Aufnahme der stabfoörmigen Gegenstände bilden, und mit einem aus einer Offenstellung in eine Schließstellung bewegbaren Schließelement, das in seiner Schließstellung eine Öffnung zwischen den freien Enden der Halterarme zumindest teilweise verschließt

Bei einem aus WO 03/001069 A1 bekannten Halter der angegebenen Art besteht das Schließelement aus einer schwenkbar an einem Halterarm befestigten Klappe, die zum Verschließen des Halters über die zwischen den Halterarmen befindlichen Öffnung geschwenkt und in der Schließstellung an dem anderen Halterarm mit Hilfe eines Rastgesperres befestigt wird Hierbei müssen die Haltekräfte zum Festhalten des in dem Haltebereich befindlichen Rohres oder Kabels von der federnden Zunge des Rastgesperres aufgenommen werden.

Aus DE 198 28 073 C1 ist ein Kabelhalter aus Kunststoff fur Fahrzeuge bekannt, der einen in ein Loch der Fahrzeugkarosserie einsetzbaren Schaft und einen mit einem Ende des Schaftes verbundenen, sich quer zu diesem erstreckenden, länglichen Halterabschnitt aufweist, an welchem ein Kabel mit einem um den Halterabschnitt und das Kabel herumgeschlungenen Band befestigt wird. Eine zweiteilige Ausführung eines Kabelhalters mit angeformtem Halteband ist aus US 5,112,013 bekannt.

Der Erfindung liegt die Aufgabe zugrunde, einen Halter der eingangs genannten Art zu schaffen, bei welchem die Montage der stabförmigen Gegenstände durch eine einfache, auch mit Hilfe eines Montagewerkzeuges leicht ausführbare Bewegung moglich ist. Der Halter soll außerdem starken Beanspruchungen, insbesondere auch Schwingungsbeanspruchungen standhalten und sicher gegen selbsttätiges Lösen sein

Die Aufgabe wird erfindungsgemäß durch einen Halter mit den in Patentanspruch 1 angegebenen Merkmalen gelöst. Vorteilhafte Ausgestaltungen des Halters sind in den Unteransprüchen angegeben

Bei dem erfindungsgemäßen Halter weist der U-förmige Haltebereich ein sich in Längsrichtung der Rinne des Haltebereichs erstreckende Fuhrung auf, wobei das Schließelement, das sich in der Offenstellung zumindest teilweise außerhalb des Haltebereiches an einem Ende der Fuhrung befindet, durch eine in die Fuhrung eindringende Bewegung in seine Schließstellung gelangt, in der es quer zur Längsrichtung der Rinne formschlüssig in der Führung gelagert ist.

Bei dem erfindungsgemaßen Halter wird das Schließelement durch eine geradlinige Bewegung aus der Offenstellung, in der es aus dem Haltebereich herausragt, in die in den Haltebereich hinein verlagerte Schließstellung gebracht Ein solcher Bewegungsablauf läßt sich sowohl von Hand als auch mit Hilfe einfacher Montagewerkzeuge ausführen, so daß der Halter in vielfacher Weise eingesetzt werden kann Der erfindungsgemäße Halter hat weiter den Vorteil, daß die Haltekräfte, die beispielsweise von einem gehaltenen Kabel ausgehend auf das Schließelement einwirken, nicht in Richtung der Schließ- bzw. Öffnungsbewegung des Schließelementes, sondern quer zu dieser Richtung wirken und daher das Schließelement nicht in Öffnungsrichtung belasten. Das Schließelement kann daher mit Hilfe federnder Rasten oder Sperren zuverlässig in der Schließstellung fixiert werden

Ein weiterer Vorteil des erfindungsgemäßen Halters ist darin zu sehen, daß keine Scharniere oder scharnierartige Gebilde benötigt werden, die das Schließelement mit dem Haltebereich verbinden. Der Halter kann daher als einstückiges Gebilde kostengünstig hergestellt werden, wobei das Schließelement vorteilhaft in einer der Offenstellung entsprechenden Position durch Materialbrücken mit dem Haltebereich verbunden ist, die bei dem Schließvorgang leicht zerstört werden können.

Vorzugsweise weist das Schließelement einen keilförmigen Abschnitt auf, der sich in der Offenstellung außerhalb der Längsprojektion der Öffnung befindet und durch die Verlagerung des Schließelementes in die Schließstellung in die Öffnung eindringt und diese ganz oder teilweise verschließt, um dadurch einen in der Rinne befindlichen stabförmigen Gegenstand dort festzuhalten. Um das Schließelement auf einfache Weise bewegen und fuhren zu können, ist es nach einem weiteren Vorschlag der Erfindung an einem Schiebestuck beweglich gehalten, das längsbeweglich in der Führung des Halters gelagert ist. Das Schließelement ist vorzugsweise mit seinem vorderen Ende an dem vorderen Ende des Schiebestücks befestigt und mit seinem hinteren Ende relativ zum Schiebestuck beweglich, wobei das Schiebestück mit seinem vorderen Ende voran in die Fuhrung im Haltebereich hinein bewegbar ist Das Schließelement wird hierbei durch die Bewegung des Schiebestückes in die Schließposition gezogen, wodurch eine Selbstverstärkung der an den Gleitflachen zwischen Haltebereich und Schließelement auftretenden Reibkräfte vermieden wird.

Die bewegliche Verbindung zwischen dem vorderen Ende des Schließelementes und dem vorderen Ende des Schiebestückes besteht vorzugsweise aus einem elastisch verformbaren Abschnitt, der in seiner entspannten Lage das Schließelement in der Offenstellung hält und bei der Bewegung des Schiebestückes in die Schließstellung durch elastische Verformung die Schließbewegung des Schließelementes ermöglicht.

Das Schließelement kann erfindungsgemäß an seinem oberen Rand eine Rippe haben, die in der Schließstellung den stabförmigen Gegenstand übergreift. Weiterhin kann vorgesehen sein, daß das Schließelement die Form eines Keiles hat, der mit seinem dünneren Ende an dem vorderen Ende des Schiebestückes befestigt ist. Durch diese Keilform kann mit Hilfe des Schließelementes eine Klemmkraft erzeugt werden, die zum Festklemmen des stabförmigen Gegenstandes in dem Halter dient. Durch die Keilform und Änderung der Schließstellung ist es außerdem möglich, die Öffnungsweite zwischen zwei gegenüberliegenden Schließelementen an unterschiedliche Dicken von stabförmigen Gegenständen anzupassen

Nach einem weiteren Vorschlag der Erfindung weist der Haltebereich des Halters eine prismatische Führungsnut auf, in welche ein am vorderen Ende des Schiebestückes ausgebildeter Führungsabschnitt formschlüssig eingreift. Hierbei kann zur Verbindung des Schiebestückes mit dem Haltebereich der Führungsabschnitt in der Offenstellung des Schiebestückes am Rand der Führungsnut mit dem Haltebereich durch Materialbrücken integral, d.h. materialschlüssig, miteinander verbunden sein Wird das Schiebestück in die Führungsnut hineingedrückt, so werden die Materialbrücken durchtrennt.

Zur Einleitung der Verschiebekräfte und Festlegung der Schließstellung des Schiebestückes kann dieses an seinem hinteren Ende den Halterarmen gegenüberliegende Arme aufweisen, die in der Schließstellung an den Halterarmen anliegen. Weiterhin können an den Halterarmen und/oder an den Armen des Schiebestückes in der Schließstellung einschnappende Rasten oder Sperren vorgesehen sein, die das Schiebestuck in der Schließstellung festhalten. Vorzugsweise sind an den Halterarmen oder an den Armen des Schiebestückes federnde Zungen angeordnet, die an ihren freien Enden Abschnitte des Schiebestückes bzw. des Haltebereiches in der Schließstellung hintergreifende Haken tragen

Vorzugsweise ist der U-förmige Halter in Bezug auf eine die Rinne mittig in Längsrichtung teilende Symmetrieebene symmetrisch ausgebildet und dementsprechend mit zwei einander gegenüberliegenden Schließelementen versehen. Beide Schließelemente sind jeweils so angeordnet, daß sie sich an den gegenüberliegenden Seiten der U-förmigen Rinne befinden.

Der Befestigungsbereich des Halters kann sowohl an dem Haltebereich als auch an dem Schiebestück vorgesehen sein und aus einem von dem Halter abstehenden Teil, beispielsweise einem Zapfen oder einer Rippe, oder aus einer Öffnung zur Aufnahme eines Befestigungsmittels bestehen.
Um die Haltekräfte des Halters in axialer Richtung zu erhöhen, kann nach einem weiteren Vorschlag der Erfindung vorgesehen sein, daß Flächen des Halters, insbesondere der Spannbacken, an denen der gehaltene stabförmige Gegenstand anliegt, mit einer Haftschicht aus einem weichen Kunststoff oder Gummi versehen sind Die Spannbacken können außerdem aus einem Kissen aus weichem Kunststoff gebildet sein, das sich an die gekrümmte Oberfläche des Gegenstands anschmiegt und dadurch den Gegenstand formschlüssig hält.

Die erfindungsgemäße Gestaltung des Halters kann auch zum Befestigen von mehreren Rohren oder Kabeln erweitert werden, indem mehrere Halter nebeneinander liegend zu einer Baueinheit miteinander verbunden werden. Hierbei können aneinanderstoßenden Halterarme und Arme des Schiebestücks zu einem Halterarm bzw Arm des Schiebestücks verschmolzen werden

Die Erfindung wird nachfolgend anhand von Ausführungsbeispielen näher erläutert, die in der Zeichnung dargestellt sind. Es zeigen
- Figur 1: eine perspektivische Darstellung einer ersten Ausfuhrungsform eines erfindungsgemäßen Halters schräg von oben gesehen,
- Figur 2: eine perspektivische Darstellung des Halters gemäß Figur 1 schräg von unten gesehen,
- Figur 3: einen Längsschnitt durch den Halter gemäß Figur 1,
- Figur 4: eine Stirnansicht des Halters gemäß Figur 1,
- Figur 5: eine Ansicht des Halters gemäß Figur 1 in der Offenstellung,
- Figur 6: eine Ansicht des Halters gemäß Figur 1 in der ein Kabel haltenden Schließstellung,
- Figur 7: eine Vorderansicht und
- Figur 8: eine Draufsicht einer zweiten Ausführungsform eines erfindungsgemäßen Halters,
- Figuren 9a und 9b: den Halter gemäß Figuren 7 und 8 in einer ersten Schließstellung und
- Figuren 10a und 10b: den Halter gemäß Figuren 7 und 8 in einer zweiten Schließstellung.

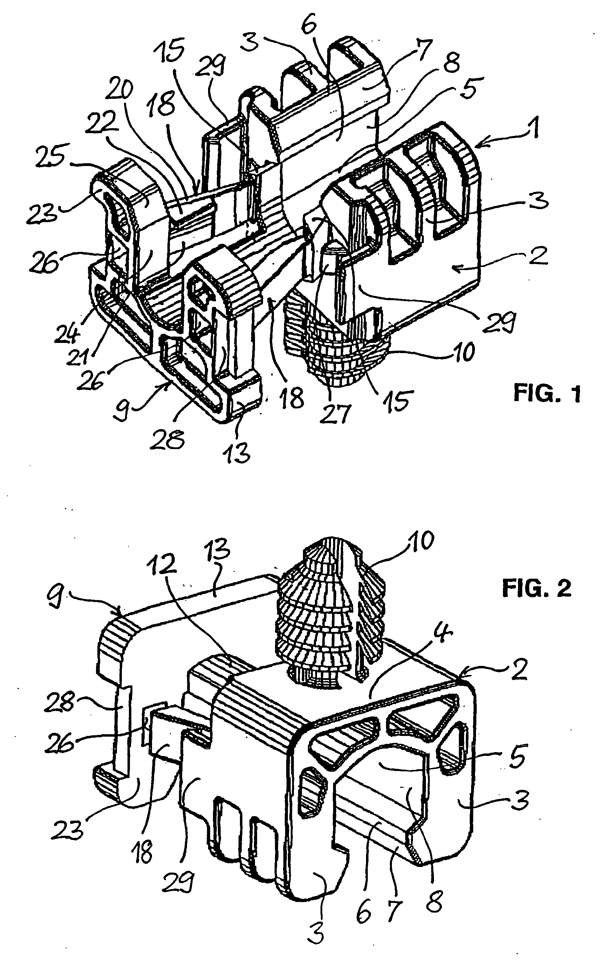

Die Figuren 1 bis 6 zeigen einen Halter 1, der zur Befestigung eines Kabels, eines Kabelbündels oder einer Rohrleitung an einem Bauteil, beispielsweise der Karosserie eines Kraftfahrzeuges bestimmt ist

Der Halter 1 hat einen Haltebereich 2 mit zwei symmetrischen Halterarmen 3, die sich in einem Abstand voneinander beiderseits der Symmetrieebene erstrecken und an einem Ende durch einen Halterfuß 4 miteinander verbunden sind. Zwischen den Halterarmen 3 befindet sich eine Rinne 5 mit einer an der Oberseite des Haltebereiches 2 liegenden Öffnung 6. An den Rändern der Öffnung 6 sind Einführschrägen 7 vorgesehen, die das Einführen eines Rohrs oder eines Kabels in die Rinne 5 erleichtern. In den beiden von den Halterarmen 3 gebildeten Seitenwänden der Rinne 5 sind prismatische Führungsnuten 8 ausgebildet, die zur Führung eines Schiebestückes 9 dienen

An der Unterseite des Halterfußes 4 befindet sich ein tannenbaumartig gestalteter Befestigungszapfen 10. Mit Hilfe des Befestigungszapfens 10 kann der Halter 1 in einer Bohrung eines Bauteiles verankert werden.

Das Schiebestück 9 weist ein vorderes Fuhrungsende 11, ein Mittelstück 12 und ein hinteres Betätigungsende 13 auf. Das Führungsende 11 ist U-förmig und auf der Seite, die der Öffnung zugewandt ist, ebenfalls offen. Es weist seitliche Führungsabschnitte 14 mit Führungsflächen 15 auf, die mit den seitlichen Führungsflächen der Führungsnuten 8 zusammenwirken.

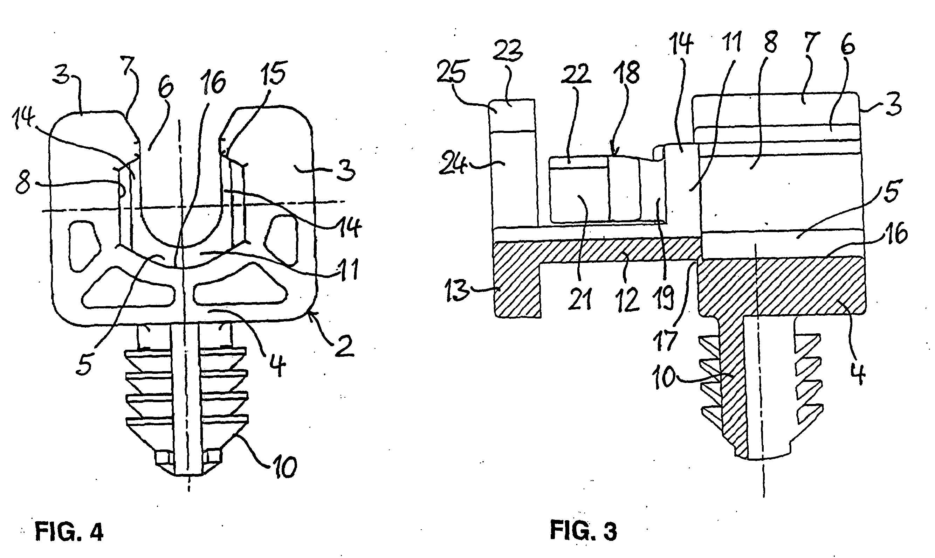

Wie aus Figur 3 zu ersehen, greift das Führungsende 11 lediglich mit einem vorderen Abschnitt geringer Breite in die Rinne 5 und die Führungsnuten 8 ein. In diesem vorderen Abschnitt ist das Führungsende 11 an dem Boden 16 der Rinne 5 und an den Führungsflächen 15 durch Materialbrücken 17 materialschlüssig mit dem Haltebereich 2 verbunden. Haltebereich 2 und Schiebestück 9 bilden daher in der anfänglichen in den Figuren 1 bis 5 gezeigten Lage ein einstückiges Teil. Die Materialbrücken 17 an den Verbindungsstellen zwischen dem Haltebereich 2 und dem Schiebestück 9 sind allerdings so klein bemessen, daß sie durch eine ubliche, das Schiebestück 9 in den Haltebereich 2 hineindrückende Montagekraft zerstört werden können und daher den Montagevorgang nicht behindern.

Das Mittelstück 12 des Schiebestückes 9 hat etwa die gleiche Breite wie die Öffnung 6 und weist keine seitlichen in die Führungsnuten 8 eingreifenden Abschnitte auf. In den dadurch beiderseits des Mittelstückes in Verlängerung der Führungsnuten 8 gebildeten Freiräumen ist jeweils ein Schließelement 18 angeordnet. Jedes Schließelement 18 ist mit seinem vorderen Ende an dem ihm benachbarten Führungsabschnitt 14 des Führungsendes 11 befestigt. Hierbei ist zwischen den Schließelementen 18 und den Führungsabschnitten 14 jeweils ein elastisch verformbarer Steg 19 ausgebildet, der eine Schwenkbewegung der Schließelemente 18 um eine quer zu ihrer Längserstreckung und im wesentlichen parallel zur Symmetrieebene verlaufende Achse ermöglicht.

Die Schließelemente 18 haben jeweils einen Abschnitt 20 in Form einer Leiste von etwa rechteckigem Querschnitt. Der Abschnitt 20 erstreckt sich von dem Steg 19 in Richtung des Betätigungsendes 13. Die Breite des Abschnitts 20 ist etwas kleiner als die Breite der Führungsnuten 8, und die Dicke des Abschnitts 20 ist etwa gleich der Tiefe der Führungsnuten 8. Der Abschnitt 20 kann daher von den Führungsnuten 8 aufgenommen werden An seinem Befestigungsende ist der Abschnitt 20 durch eine auf seiner Innenseite befindliche Abschrägung verjüngt

Die Abschnitte 20 der Schließelemente 18 tragen an ihren hinteren, beweglichen Enden auf den einander zugekehrten Innenseiten jeweils einen Spannbacken 21, der an seinem oberen Rand in eine keilförmige Rippe 22 übergeht, die sich zur Haltermitte hin erstreckt und deren Breite in Richtung auf das Betätigungsende 13 zunimmt. Die Anlagefläche des Spannbackens 21 ist an der Übergangsstelle zur Rippe 22 gekrümmt.

In der in den Figuren 1 bis 5 gezeigten Offenstellung sind die Schließelemente 18 so angeordnet, daß ihre Abschnitte 20 einen sich in Richtung auf das Betätigungsende 13 öffnenden Winkel bilden Die einander zugekehrten Vorderkanten der Rippen 22 verlaufen hierbei im wesentlichen parallel und ihr Abstand ist etwa gleich der Breite der Öffnung 6.

Das Betätigungsende 13 des Schiebestückes 9 weist zwei Arme 23 auf, die sich parallel zu den Halterarmen 3 erstrecken und etwa die gleiche Länge und Breite wie diese haben. Zwischen den Armen 23 befindet sich eine Ausnehmung 24, die sich bis zum Mittelstück 12 erstreckt und etwa die gleiche Breite wie die Öffnung 6 hat. Am offenen Ende der Ausnehmung 24 sind Einfuhrschrägen 25 vorgesehen, die mit den Einführschrägen 7 fluchten. Etwa in ihrer Mitte haben die Arme 23 rechteckige Öffnungen 26. Die Öffnungen 26 dienen zur Aufnahme von Vorsprüngen 27, die an den Halterarmen 3 angebracht sind und in der Schließstellung des Schiebestückes 9 in die Öffnungen 26 eingreifen, um dadurch das Schiebestück 9 zusätzlich an dem Haltebereich 2 abzustützen. Die Arme 23 weisen außerdem auf ihren der Ausnehmung 24 entgegengesetzten Außenseite mit einem Hinterschnitt versehene Ausnehmungen 28 auf. Die Ausnehmungen 28 sind zur Aufnahme von Federzungen 29 bestimmt, die sich von den Halterarmen 3 in Richtung der Arme 23 erstrecken. An den freien Enden der Federzungen 29 sind nach innen gerichtete, sägezahnartige Haken 30 vorgesehen, die in der Schließstellung des Schiebestücks 9 in die Ausnehmungen 28 eingreifen und in die hinterschnittenen Bereiche der Ausnehmungen 28 einschnappen, um das Schiebestück 9 in der Schließstellung festzuhalten

Der Halter 1 wird in der in den Figuren 1 bis 5 gezeigten Offenstellung hergestellt, welche die Ausgangslage für die Montage eines Rohrs oder Kabels bildet. Für die Montage wird das Rohr oder das Kabel in den durch die Rinne 5 und die Ausnehmung 24 gebildeten Freiraum eingelegt und in Kontakt mit dem Mittelstück 12 gebracht. Anschließend wird das Schiebestuck 9 durch Druck auf das Betätigungsende 13 in Richtung des Haltebereichs 2 so stark belastet, daß die zwischen dem Führungsende 11 und dem Haltebereich 2 vorhandenen Materialbrücken abgeschert werden und das Schiebestück 9 in die Rinne 5 hineingeschoben wird. Hierbei gelangen die Rückseiten 31 der Schließelemente 18 in Kontakt mit den Vorsprüngen 27 und werden durch diese so weit zusammengedrückt, daß sie in die Führungsnuten 8 eindringen können. Die Spannbacken 21 der Schließelemente 18 legen sich hierbei an gegenüberliegenden Seiten an das Rohr bzw. das Kabel 32 an und klemmen dieses zwischen sich ein. Gleichzeitig übergreifen die Rippen 22 die der Öffnung 6 zugekehrte Seite des Rohres bzw. des Kabels 32, wodurch dieses formschlüssig in dem Haltebereich 2 festgehalten wird. Die von den Schließelementen 18 aufzunehmenden Haltekräfte werden unmittelbar im Bereich der Führungsnuten 8 an den Halterarmen 3 abgestützt und belasten das Schiebestück 9 nicht in Öffnungsrichtung.

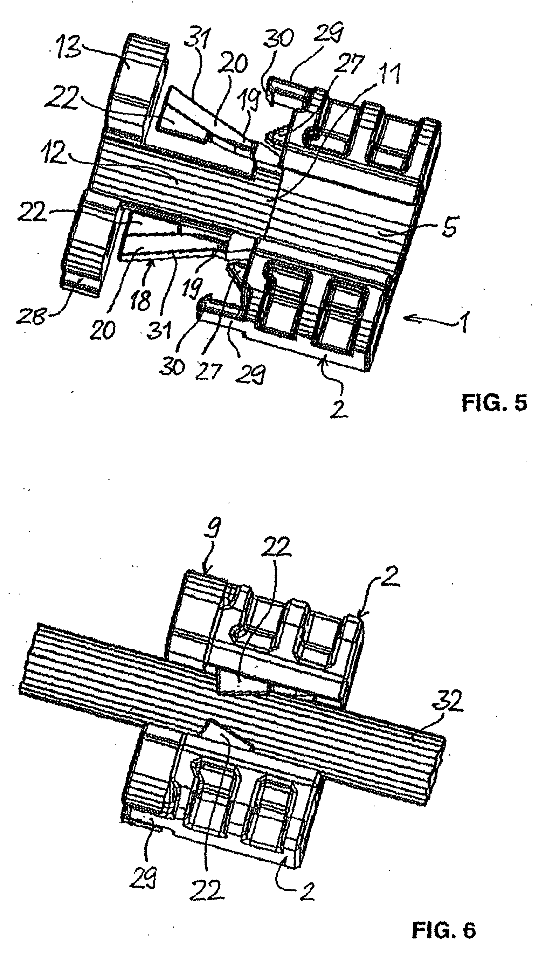

In Figur 6 ist die Schließstellung gezeigt. Hierbei liegen die Arme 13 an den Halterarmen 3 an, und das Führungsende 11 sowie das Mittelstück 12 des Schiebestückes 9 befinden sich vollständig innerhalb des Haltebereiches 2. Die Federzungen 29 greifen in die Ausnehmungen 28 ein und halten mit Hilfe der Haken 30 das Schiebestück 9 in dieser Stellung fest. Zudem wird das Schiebestück 9 durch die in die Öffnungen 26 eingreifenden Vorsprünge 27 gegen Verdrehung gegenüber dem Haltebereich 2 gesichert. Die Rippen 22 ragen in die Öffnung 6 hinein und halten dadurch das Rohr oder Kabel 32 in dem Halter 1 zuverlässig fest

Soll der Halter 1 wieder geöffnet werden, um das Rohr oder Kabel entfernen zu können, so genügt es, die beiden Haken 30 an den Federzungen 29 mit Hilfe eines Werkzeuges aus den hinterschnittenen Abschnitten der Ausnehmungen 28 herauszudrücken und anschließend das Schiebestück 9 in Öffnungsrichtung aus dem Haltebereich 2 herauszuziehen. Da das Schiebestück 9 bei der Montage von dem Haltebereich 2 getrennt wurde, kann dieses auch vollständig von dem Haltebereich 2 entfernt werden. Sobald die Schließelemente 18 aus dem Haltebereich herausgezogen sind, kehren sie in ihre Ursprungslage zurück und geben das Rohr oder Kabel frei Der Halter 1 kann anschließend in der zuvor beschriebenen Weise wieder zur erneuten Montage eines Rohres oder Kabels verwendet werden

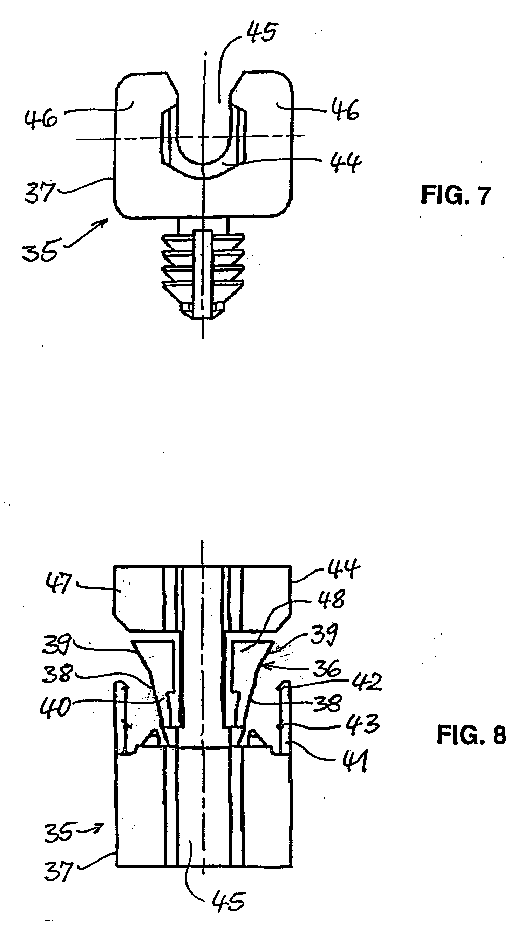

Der in den Figuren 7 und 8 gezeigte Halter 35 entspricht in seinem grundsätzlichen Aufbau im wesentlichen dem Halter 1. Im folgenden wird daher nur auf die von dem Halter 1 abweichenden Gestaltungsmerkmale eingegangen. Bei dem Halter 35 sind die Schließelemente 36 auf ihrer sich an dem Haltebereich 37 abstützenden Rückseite 38 mit einer schrägen oder keilförmigen Rampe 39 versehen. Die Rampe 39 befindet sich jeweils an dem hinteren beweglichen Ende der Schließelemente 36 Der Winkel der Rampen 39 zur Längsachse des Halters 35 ist deutlich größer als der Winkel, den die Rückseiten 38 der vorderen Abschnitte 40 der Schließelemente 36 mit der Längsachse des Halters bilden. Der Haltebereich 37 des Halters 35 weist außerdem verlängerte Federzungen 41 mit jeweils zwei im Abstand voneinander angeordneten, sägezahnartigen Haken 42, 43 auf, die zum Festhalten des Schiebestücks 44 in zwei unterschiedlichen Axialpositionen dienen

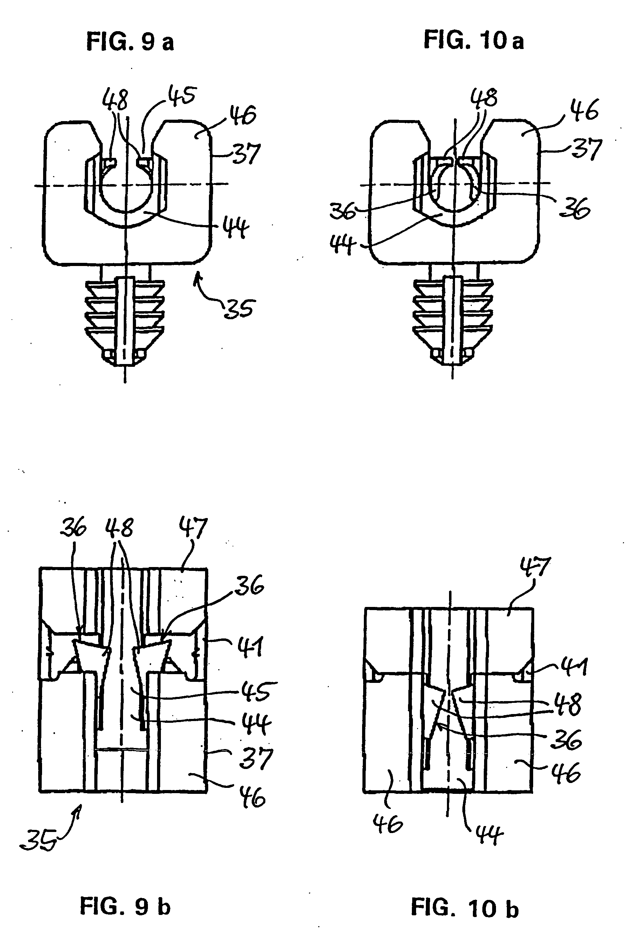

Mit dem Halter 35 können dickere und dünnere Rohre oder Kabel befestigt werden. In den Figuren 9a, 9b ist die Schließstellung zum Befestigen von Rohren oder Kabeln gezeigt, deren Durchmesser etwa der Breite der Öffnung 45 zwischen den Halterarmen 46 entspricht. In dieser Stellung befindet sich das Betätigungsende 47 in einem Abstand von dem Haltebereich 37, wobei es von den Haken 42 daran gehindert wird, in die Offenstellung gemäß Figur 8 zurückzukehren. Die Schließelemente 36 greifen nur mit ihren Abschnitten 40 in die Führungsnuten des Haltebereiches 37 ein, wobei die Schließelemente 36 mit ihren Rippen 48 so weit in die Öffnung 45 hineinragen, daß ein Rohr oder ein Kabel mit einem der Öffnungsbreite entsprechenden Durchmesser ausreichend sicher gehalten wird.

Zum Festhalten von Rohren oder Kabeln kleineren Durchmessers kann das Schiebestück 44 bis in seine Anschlagstellung an den Haltebereich 37 bewegt werden, wie in den Figuren 10a, 10b gezeigt. Bei diesem Vorgang werden die Schließelemente 36 mit ihren Rampen 39 vollständig in die Führungsnuten des Haltebereiches 37 hineingezogen. Hierdurch drücken die sich an den Halterarmen 46 abstützenden Rampen 39 die Schließelemente dichter zusammen, so daß zwischen ihnen nur noch eine kleinere Öffnung bestehen bleibt, die durch die einander annähernd berührenden Rippen 48 nach außen nahezu vollständig geschlossen ist. Auf diese Weise werden auch Rohre oder Kabel kleineren Durchmessers sicher gehalten

## Patentansprüche

1. Halter (1) für stabförmige Gegenstände (32) wie Rohre, Kabel oder dergleichen, mit einem Befestigungsbereich, der zur Befestigung des Halters an einem Bauteil bestimmt ist, einem Paar Halterarme (3), die an einem Ende fest miteinander verbunden sind und einen U-förmigen Haltebereich (2) mit einer oben offenen Rinne (5) zur Aufnahme der stabförmigen Gegenstände bilden, und mit einem aus einer Offenstellung in eine Schließstellung bewegbaren Schließelement (18), das in seiner Schließstellung eine Öffnung zwischen den freien Enden der Halterarme zumindest teilweise verschließt, **dadurch gekennzeichnet, daß** der U-förmige Haltebereich (2) eine sich in Längsrichtung der Rinne (5) des Haltebereichs (2) erstreckende Führung aufweist, wobei das Schließelement (18), das sich in der Offenstellung zumindest teilweise außerhalb des Haltebereiches (2) an einem Ende der Führung befindet, durch eine in die Führung eindringende Bewegung in seine Schließstellung gelangt, in der es quer zur Längsrichtung der Rinne (5) formschlüssig in der Führung gelagert ist.

2. Halter (1) nach Anspruch 1, **dadurch gekennzeichnet, daß** das Schließelement (18) in einer der Offenstellung entsprechenden Position durch Materialbrücken (17) mit dem Haltebereich (3) verbunden ist, die bei dem Schließvorgang leicht zerstört werden können.

3. Halter (1) nach einem der Ansprüche 1 oder 2, **dadurch gekennzeichnet, daß** das Schließelement (18) einen keilförmigen Abschnitt (20) aufweist, der sich in der Offenstellung außerhalb der Längsprojektion der Öffnung befindet und durch die Verlagerung des Schließelementes (18) in die Schließstellung in die Öffnung (6) eindringt und diese ganz oder teilweise verschließt, um dadurch einen in der Rinne (5) befindlichen stabförmigen Gegenstand dort festzuhalten.

4. Halter (1) nach einem der vorhergehenden Ansprüche, **dadurch gekennzeichnet, daß** das Schließelement (18) an einem Schiebestück (9) beweglich gehalten ist, das längsbeweglich in der Führung des Haltebereichs (2) gelagert ist.

5. Halter (1) nach Anspruch 4, **dadurch gekennzeichnet, daß** das Schließelement (18) mit seinem vorderen Ende an dem vorderen Ende des Schiebestücks (9) befestigt und mit seinem hinteren Ende relativ zum Schiebestück (9) beweglich ist, wobei das Schiebestück (9) mit seinem vorderen Ende voran in die Führung im Haltebereich (2) hinein bewegbar ist.

6. Halter (1) nach Anspruch 5, **dadurch gekennzeichnet, daß** die bewegliche Verbindung zwischen dem vorderen Ende des Schließelementes (18) und dem vorderen Ende des Schiebestückes (9) aus einem elastisch verformbaren Abschnitt (19) besteht, der in seiner entspannten Lage das Schließelement (18) in der Offenstellung hält und bei der Bewegung des Schiebestückes (9) in die Schließstellung durch elastische Verformung die Schließbewegung des Schließelementes ermöglicht.

7. Halter (1) nach einem der vorhergehenden Ansprüche, **dadurch gekennzeichnet, daß** das Schließelement (18) an seinem oberen Rand eine Rippe (22) hat, die in der Schließstellung den stabförmigen Gegenstand übergreift.

8. Halter (1) nach einem der Ansprüche 4 bis 7, **dadurch gekennzeichnet, daß** das Schließelement (18) die Form eines Keiles hat, der mit seinem dünneren Ende an dem vorderen Ende des Schiebestückes (9) befestigt ist.

9. Halter (1) nach einem der Ansprüche 4 bis 8, **dadurch gekennzeichnet, daß** der Haltebereich des Halters (1) eine prismatische Führungsnut (8) aufweist, in welche ein am vorderen Ende des Schiebestückes (9) ausgebildeter Führungsabschnitt (14) formschlüssig eingreift.

10. Halter (1) nach einem der Ansprüche 4 bis 9, **dadurch gekennzeichnet, daß** das Schiebestück (9) an seinem hinteren Ende den Halterarmen (3) gegenüberliegende Arme (23) aufweist, die in der Schließstellung an den Halterarmen (3) anliegen.

11. Halter (1) nach einem der Ansprüche 4 bis 10, **dadurch gekennzeichnet, daß** an den Halterarmen (3) und/oder an den Armen (23) des Schiebestückes (9) in der Schließstellung einschnappende Rasten oder Sperren vorgesehen sind, die das Schiebestück in der Schließstellung festhalten.

12. Halter (1) nach einem der Ansprüche 4 bis 11, **dadurch gekennzeichnet, daß** an den Halterarmen (3) oder an den Armen (22) des Schiebestückes (9) federnde Zungen angeordnet sind, die an ihren freien Enden Abschnitte des Schiebestückes (9) bzw. des Haltebereiches (2) in der Schließstellung hintergreifende Haken (30) tragen.

13. Halter (1) nach einem der Ansprüche 4-12, **dadurch gekennzeichnet, daß** das Schiebestück (44) in zwei in einem Abstand voneinander angeordneten Schließstellungen an dem Haltebereich (37) festhaltbar ist.

14. Halter (1) nach einem der vorhergehenden Ansprüche, **dadurch gekennzeichnet, daß** der Halter (1) in Bezug auf eine die Rinne (5) in Längsrichtung teilende Symmetrieebene symmetrisch ausgebildet und mit zwei einander gegenüberliegenden Schließelementen (18) versehen ist.

15. Halter (1) nach einem der vorhergehenden Ansprüche, **dadurch gekennzeichnet, daß** Flächen des Halters (1), insbesondere der Spannbacken (21), an denen der gehaltene stabförmige Gegenstand anliegt, mit einer Haftschicht aus einem weichen Kunststoff oder Gummi versehen sind.

## Claims

1. Holder (1) for rod-like objects (32), such as pipes, cables or the like, having a fastening portion intended for fastening the holder to a part, a pair of holder arms (3) fixedly connected to each other at one end, and a U-shaped holding portion (2) with a trough (5) open at the top to accommodate the rod-like objects, and having a closing element (18) movable out of an open position into a closed position and, in its closed position, at least partly closing an opening between the free ends of the holder arms, **characterized in that** the U-shaped holding portion (2) comprises a guide extending in lengthwise direction of the trough (5) of the holding portion (2), where the closing element (18), which in open position is located at least partly outside of the holding portion (2) at one end of the guide, arrives by a motion penetrating the guide in its closed position, in which it is geometrically lodged in the guide, transverse to the lengthwise direction of the trough (5).

2. Holder (1) according to claim 1, **characterized in that** the closing element (18) is connected to the holding portion (3) in a position corresponding to the open position by bridges of material (17) that can readily be destroyed in the course of the closing operation.

3. Holder (1) according to either of claims 1 and 2, **characterized in that** the closing element (18) comprises a wedge-shaped segment (20) located outside of the longitudinal projection of the opening in the open position, entering the opening (6) through displacement of the closing element (18) into the closed position and wholly or partially closing said opening, in order thereby to secure in place a rod-like object present in the trough (5).

4. Holder (1) according to any of the preceding claims, **characterized in that** the closing element (18) is movably held on a slide (9) lodged movable lengthwise in the guide of the holding portion (2).

5. Holder (1) according to claim 4, **characterized in that** the closing element (18) is fastened by its anterior end to the anterior end of the slide (9) and is movable relative to the slide (9) by its posterior end, the anterior end of the slide (9) being movable forward into the guide in the holding portion (2).

6. Holder (1) according to claim 5, **characterized in that** the movable connection between the anterior end of the closing element (18) and the anterior end of the slide (9) consists of an elastically deformable segment (19) which, in its relieved position, holds the closing element (18) in the open position, and, upon motion of the slide (9) into the closed position, makes possible the closing motion of the closing element by elastic deformation.

7. Holder (1) according to any of the preceding claims, **characterized in that** the closing element (18) on its upper edge has a rib (22) overgrasping the rod-like object in closed position.

8. Holder (1) according to any of the preceding claims 4 to 7, **characterized in that** the closing element (18) has the shape of a wedge fastened by its thinner end to the anterior end of the slide (9).

9. Holder (1) according to any of the preceding claims 4 to 8, **characterized in that** the holding portion of the holder (1) comprises a prism-shaped guide groove (8) positively engaged by a guide segment (14) configured at the anterior end of the slide (9).

10. Holder (1) according to any of the preceding claims 4 to 9, **characterized in that** the slide (9) at its posterior end comprises arms (23) opposed to the holder arms (3) and lying in contact with the holder arms (3) in the closed position.

11. Holder (1) according to any of the preceding claims 4 to 10, **characterized in that**, on the holder arms (3) and/or on the arms (23) of the slide (9), catches or locks snapping in in the closed position are provided, securing the slide in the closed position.

12. Holder (1) according to any of the preceding claims 4 to 11, **characterized in that**, on the holder arms (3) or on the arms (22) of the slide (9), spring tongues are arranged, bearing hooks (30) at their free ends, undergrasping the slide (9) and/or the holding portion (2) in the closed position.

13. Holder (1) according to any of the preceding claims 4 to 12, **characterized in that** the slide (44) is fastenable to the holding portion (37) in two closed positions arranged at a distance from each other.

14. Holder (1) according to any of the preceding claims, **characterized in that** the holder (1) is symmetrically configured with respect to a plane of symmetry parting the trough (5) in lengthwise direction and provided with two closing elements (18) opposed to each other.

15. Holder (1) according to any of the preceding claims, **characterized in that** surfaces of the holder (1), in particular of the jaws (21) with which the rod-like object held lies in contact, are provided with an adhesion layer of a soft synthetic material or of rubber.

## Revendications

1. Attache (1) pour objets (32) en forme de tiges, tels que des tubes, des câbles, ou similaires, comprenant une zone de fixation destinée à assurer la fixation de l'attache sur un élément de construction, une paire de bras de maintien (3) reliés solidairement l'un à l'autre par l'une de leurs extrémités, et définissant une zone de maintien (2) en forme de U formant un canal (5) ouvert en haut, destiné à recevoir les objets en forme de tiges, et comprenant un élément de fermeture (18) pouvant être déplacé d'une position ouverte vers une position fermée, élément qui, dans sa position fermée, referme au moins partiellement une ouverture existant entre les extrémités libres des bras de maintien,
**caractérisée en ce que** la zone de maintien (2) en U comprend un guidage s'étendant dans le sens longitudinal du canal (5) de la zone de maintien, l'élément de fermeture (18) qui, dans sa position ouverte, se trouve au moins partiellement en dehors de la zone de maintien (2), se situe à une extrémité du guidage, et arrive dans sa position de fermeture par un mouvement de pénétration dans le guidage, position dans laquelle il se loge dans le guidage, avec conjugaison des formes, transversalement au sens longitudinal du canal (5).

2. Attache (1) selon la revendication 1, **caractérisée en ce que**, dans une position correspondant à la position d'ouverture, l'élément de fermeture (18) et relié à la zone de maintien par l'intermédiaire de ponts de matière (17) qui se laissent rompre facilement lors d'une opération de fermeture.

3. Attache (1) selon l'une des revendications 1 ou 2, **caractérisée en ce que** l'élément de fermeture (18) comporte une section en forme de coin (20) qui, dans la position d'ouverture, se situe à l'extérieur de la projection longitudinale de l'ouverture et qui, lors du déplacement de l'élément de fermeture (18) vers sa position de fermeture, pénètre dans l'ouverture (6) en refermant celle-ci, soit entièrement, soit partiellement, de façon à retenir ainsi dans le canal (5) un objet en forme de tige se trouvant dans ce canal.

4. Attache (1) selon l'une des revendications précédentes, **caractérisée en ce que** l'élément de fermeture (18) est maintenu de façon mobile sur un coulisseau (9) qui est monté de façon mobile dans le sens longitudinal dans le guidage de la zone de maintien (2).

5. Attache (1) selon la revendication 4, **caractérisée en ce que** l'extrémité avant de l'élément de fermeture (18) est fixée sur l'extrémité avant du coulisseau (9), et que son extrémité arrière est mobile par rapport au coulisseau (9), le coulisseau (9) pouvant être déplacé, l'extrémité avant en première, vers l'intérieur du guidage, dans la zone de maintien (2).

6. Attache (1) selon la revendication 5, **caractérisée en ce que** la liaison mobile entre l'extrémité avant de l'élément de fermeture (18) et l'extrémité avant du coulisseau (9) est constituée par une partie élastique (19) qui, dans la position détendue, maintient l'élément de fermeture dans sa position ouverte et, lorsque le coulisseau (9) est déplacé dans la position de fermeture, permet le mouvement de fermeture de l'élément de fermeture grâce à une déformation élastique.

7. Attache (1) selon l'une des revendications précédentes, **caractérisée en ce que** l'élément de fermeture (18) comporte, à son bord supérieur, une nervure (22) qui, dans la position de fermeture, enserre l'objet en forme de tige par le haut.

8. Attache (1) selon l'une des revendications 4 à 7, **caractérisée en ce que** l'élément de fermeture (18) présente une forme de coin relié, par son extrémité plus mince, à l'extrémité avant du coulisseau (9).

9. Attache (1) selon l'une des revendications 4 à 8, **caractérisée en ce que** la zone de maintien de l'attache (1) comporte un rainure de guidage prismatique (8) dans laquelle s'engage, avec conjugaison des formes, une partie de guidage (14) aménagée à l'extrémité avant du coulisseau (9).

10. Attache (1) selon l'une des revendications 4 à 9, **caractérisée en ce que** le coulisseau (9) comporte, à son extrémité arrière, des bras opposés (23) qui, en position de fermeture, sont plaqués contre les bras de maintien (3).

11. Attache (1) selon l'une des revendications 4 à 10, **caractérisée en ce que** des crans d'arrêt ou verrous à enclenchement sont prévus sur les bras de maintien (3) et/ou sur les bras (23) du coulisseau (9), qui retiennent le coulisseau en position de fermeture.

12. Attache (1) selon l'une des revendications 4 à 11, **caractérisée en ce que** des languettes élastiques sont agencées sur les bras de maintien (3) ou sur les bras (23) du coulisseau (9) et portent, à leurs extrémités libres, des crochets (30) s'enclenchant, dans la position de fermeture, derrière des parties du coulisseau (9) ou de la zone de maintien (2).

13. Attache (1) selon l'une des revendications 4 à 12, **caractérisée en ce que** le coulisseau (44) peut être arrêté dans la zone de maintien (37) dans deux positions de fermeture disposées à une distance l'une de l'autre.

14. Attache (1) selon l'une des revendications précédentes, **caractérisée en ce que** l'attache (1) est configurée de façon symétrique par rapport à un plan de symétrie coupant le canal (5) dans le sens de la longueur, et est pourvue de deux éléments de fermeture (18) opposés l'un à l'autre.

15. Attache (1) selon l'une des revendications précédentes, **caractérisée en ce que** les surfaces de l'attache (1), en particulier celles des mors de serrage (21), qui sont en contact avec l'objet en forme de tige ainsi maintenu, sont pourvues d'une couche d'adhérence faite en une matière synthétique souple ou en caoutchouc.
